# EUROPEAN PATENT SPECIFICATION

(11) **EP 0 944 464 B1**
(45) Date of publication and mention of the grant of the patent: **14.11.2001**
(21) Application number: 96941822.7
(22) Date of filing: 16.12.1996
(51) Int. Cl.: B29C 44/12, B29C 44/34, B29C 33/00

(54) **PRESS FOR FOAMING INSULATING PANELS**
PRESSE ZUM SCHÄUMEN VON ISOLIERUNGSPLATTEN
PRESSE POUR INJECTION DE MOUSSE DANS DES PANNEAUX ISOLANTS

(43) Date of publication of application: 29.09.1999
(73) Proprietor: Adami, Federico, 46020 Pegognaga (IT)
(72) Inventor: Adami, Federico, 46020 Pegognaga (IT)
(74) Representative: Gotra, Stefano
(86) International application number: IT9600254
(87) International publication number: WO9826915

(56) References cited:
- FR-A- 2 205 405
- US-A- 2 713 699
- US-A- 3 970 732
- US-A- 4 257 150
- PATENT ABSTRACTS OF JAPAN vol. 008, no. 073 (M-287), 5 April 1984 & JP 58 220713 A (YAMAHA HATSUDOKI KK), 22 December 1983,

## Description

The present invention relates to a press for foaming insulating panels.

The use of panels consisting of two containment sheets and an inner layer of insulating material has for some time been adopted in a wide range of sectors: one need only consider the need for insulating, both thermally and acoustically, living and working environments, as well as the need for thermally insulating environments - including those of a transportable nature - intended for storing food products or in any case requiring a constant ambient temperature.

The foaming of insulating panels is obtained by means of the injection of a polyurethane compound into the space existing between two containment sheets and associated connecting end-sections: this polyurethane compound, once injected, expands, giving rise to a reaction producing on the two containment sheets a pressure of 0.4 to 0.7 kg/cm².

For this reason, the known technology for the production of these foamed panels makes use of machines, called presses, in which the external surfaces of both the containment sheets are positioned in contact with two steel plates which have the function of opposing deformation of the sheets themselves due to the action of internal expansion of the polyurethane compound.

It must be noted that, on some occasions, the contact between containment sheets of the panels and plates of the press is cushioned by layers usually of formica, designed to dissipate the heat which forms during the process involving expansion of the polyurethane compound. During the reaction which occurs in the injected polyurethane compound, air bubbles are formed, these air bubbles remaining trapped in the mass of the insulating layer, once the reaction has been completed.

These air bubbles are undesirable since they generate discontinuity in the polyurethane mass with a corresponding lack of uniformity in the insulating power of the mass itself.

These bubbles moreover reduce the mechanical strength of the panel itself, rendering the latter sometimes unacceptable or resulting in the need for overdimensioning, especially in the case of motor-transported refrigerating units.

In order to reduce the excessively large dimensions of the panels, in many cases use is made of additives which increase the expansion pressure up to as much as 2 kg/m², but this results in a notable overdimensioning of the structure of the press with considerable plant and operating costs.

Another drawback present in the known technology for the production of said insulating panels is due to the fact that, during the reaction of the polyurethane resin, inflammable and toxic gases are released and at present discharged into the atmosphere.

US-A-2713699 discloses a press for foaming insulating panels of the type comprising two plates which can be arranged above one another and one of which is movable with respect to the other one which is fixed, wherein one of the two plates carries, integrally constrained thereto, a frame of height equal to the thickness of the panel to be foamed and with a perimetral extension greater than that of the aforementioned panel, said panel with the two plates forming a chamber.

US-A-3970732 discloses a method and an apparatus for molding foamed plastic materials in which the reduced pressure in the mold cavity causes the material to foam extremely quickly so as completely to fill the cavity while, at the same time, the mold is held closed by the pressure differential between the inside and outside thereof.

One object of the present invention is that of providing a press for foaming insulating panels, provided with a system designed to avoid the trapping of air bubbles in the polyurethane compound injected within the containment sheets of the panels themselves.

Another object of the present invention, which is a direct consequence of the first one, is obtaining a reduction in the pressure exerted on the press plates by the containment sheets of the panels during foaming with the advantage of being able to provide a press with a lightened support structure.

These and other objects are all achieved by the press for foaming insulating panels according to Claim 1.

These and other characteristic features will emerge more clearly from the following description of a preferred embodiment illustrated, purely by way of a non-limiting example, in the accompanying drawings, in which:

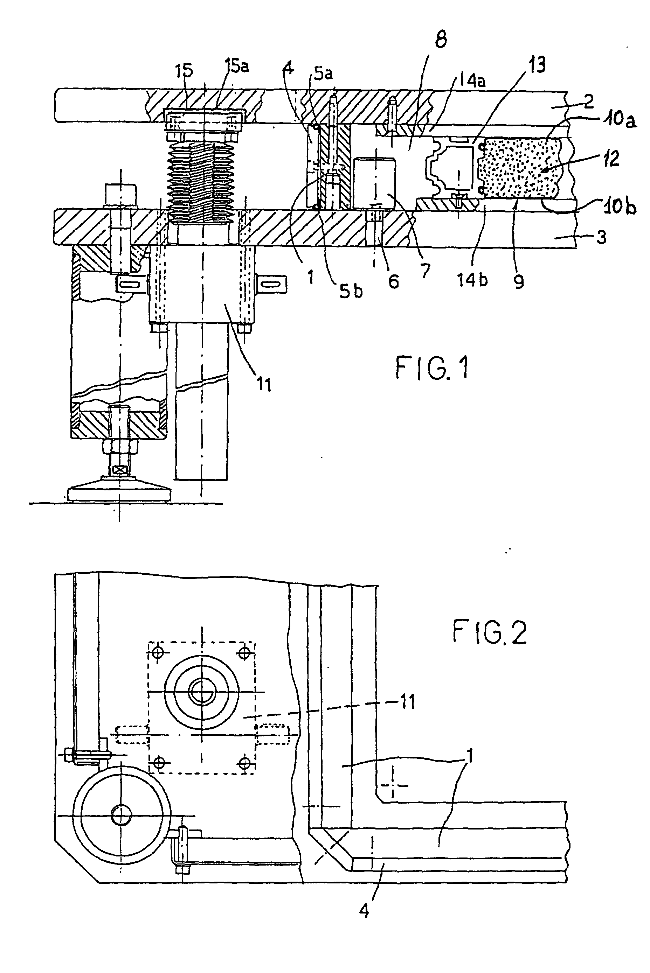

- Figure 1) shows a partial side view of a portion of the press according to the present invention;
- Figure 2) shows a diagrammatic partial plan view of the same portion of the press.

The figures show partially a press for foaming insulating panels comprising a first frame which delimits the perimetral extension of a molding cavity for the panel, a fixed lower plate 3, and a movable upper plate 2 which carries, integrally constrained thereto, a second frame 1 of height equal to the distance between plate 2 and plate 3.

The second frame 1 surrounds said first frame and has a perimetral extension greater than that of the said panel; the second frame 1 has over its entire outer perimeter a plate 4 constrained to the aforementioned frame by the tightening of bolts and this tightening action enables an upper seal 5a and a lower seal 5b to be retained between the plate 4 and second frame 1.

The fixed lower plate 3 of the press has passing through i it, via a duct 6, a pipe of a vacuum-generating plant provided with a filter 7.

The movable upper plate 2 is moved by four helical-screw, square-profile, mechanical jacks 11 which are connected together by a kinematic chain so as to ensure the absolute synchronism of movement of the aforementioned mechanical jacks 11 and consequently the totally regular operation of the movable upper plate 2.

The operating principle of the press according to the present invention is now described in connection with the reference numbers shown in the Figures. Once the panel to be foamed 9 has been positioned on the formica layer 14b fixed to the upper side of the of the lower plate 3 of the press, the four mechanical jacks 11 start up simultaneously and cause lowering of the movable upper plate 2 of the press.

Each screw of each mechanical jack 11, which is translated axially and vertically, has at its top end a polygonal flange 15 which is inserted into a special seat 15a formed in the thickness of the movable upper plate 2; this seat 15a has the function of centring each flange 15 and prevents any lateral displacement of the aforementioned upper plate, but allows the upper plate to be raised freely if the pressure of the polyurethane mass increases beyond the preset value owing, for example, to the greater quantity of foam injected.

As a result, the screws of the four mechanical jacks 11 are able to perform the function both of moving the movable upper plate 2 and of ensuring perfect vertical guiding thereof without creating any reactive forces on the press structure.

These jacks could also be more than four in number if the upper plate of the press should have particularly large plan dimensions.

The aforementioned movable upper plate carries on its bottom side, in addition to the formica layer 14a, the frame 1, the associated perimetral plate 4 and the two seals, i.e. upper seal 5a and lower seal 5b; the upper seal 5a has already been compressed, during assembly of the press, against the movable upper plate 2.

The lowering movement of the movable upper plate 2 continues until the frame 1 strikes against the upper side of the fixed lower plate 3; when this contact occurs the lower seal 5b is compressed against the fixed lower plate 3.

At this point the panel to be foamed 9 is not only perfectly locked in position between the two formica layers 14a and 14b, but is also situated inside a chamber 8 which is sealed with respect to the surrounding environment by the seals 5a and 5b.

The chamber 8 is formed between the first and the second frame and between the two plates 2 and 3.

The next stage is that of obtaining the vacuum inside the chamber 8 and in the molding cavity by means of a plant suitable for this purpose, of a known type and not illustrated, the piping of which passing through the fixed lower plate 3 of the press via the duct 6 terminates inside the aforementioned chamber 8 with the filter 7.

The vacuum generated inside the chamber 8 prevents the formation of air bubbles inside the polyurethane mass 12 during the expansion process thereof because there is no sealing between the containment sheets 10a and 10b of the panel 9, between the latter and the plates 2 and 3 of the press and the formica layers 14a and 14b, nor between the polyurethane mass 12 and the connecting end-sections 13.

The air extracted from the chamber 8 also contains toxic gases due to the chemical reaction and therefore may be advantageously conveyed into suitable filtering plants.

In the description provided above specific reference has been made to a press with a vertically movable upper plate and a fixed lower plate, but it is obvious that other configurations may also be adopted both as regards the moving plate and as regards the nature of this movement, for example of the folding type.

As regards movement of the movable plate, it is also possible to adopt solutions other than the mechanical jacks illustrated in the above description, such as for example hydraulic systems or the like, suitable in any case for ensuring absolute synchronism between all the moving groups of the movable plate.

The press may also consist of several surfaces or levels located above one another, each level being provided with a frame for creating a chamber connected to the vacuum plant.

## Claims

1. Press for foaming insulating panels of the type comprising a first frame delimiting the perimetral extension of a molding cavity for the panel, two plates (2 and 3) which can be arranged above one another and one of which is movable with respect to the other one which is fixed, **characterized in that** one (2) of the two plates (2 and 3) carries, integrally constrained thereto, a second frame (1) which surrounds said first frame and it is of height equal to the distance between plate 2 and plate 3 and with a perimetral extension greater than that of the aforementioned panel, a chamber (8) being formed between these two frames and between the two plates (2 and 3), said chamber being connected to a pneumatic plant designed to produce the vacuum in said chamber (8) and through said chamber (8) in the molding cavity.

2. Press according to Claim 1, **characterized in that** the frame (1) has over its entire outer perimeter a plate (4) constrained to the aforementioned frame by means of the tightening of bolts, said tightening enabling an upper seal (5a) and a lower seal (5b) to be retained between the plate (4) and frame (1).

3. Press according to Claim 1, **characterized in that** it has a movable upper plate (2), a frame (1) integral with said movable plate and a fixed lower plate (3).

4. Press according to Claim 1, **characterized in that** it comprises four mechanical jacks (11) for vertical movement of a movable upper plate (2), the screw of each of which jacks has at its top end a flange (15) which is inserted into a special seat (15a) formed in the thickness of the movable upper plate (2), this seat having the function of centring each flange (15) and preventing any lateral displacement of the movable upper plate (2) and maintaining the freedom for vertical axial displacements of said upper plate.

## Patentansprüche

1. Presse zum Schäumen von Isolierungsplatten der Art umfassend einen ersten, den Umfang eines Formraumes für die Platte begrenzenden Rahmen, zwei plattenförmige Elemente (2 und 3), die übereinander angeordnet werden können, wobei eines dieser Elemente beweglich gegenüber dem anderen festen Element ist, **dadurch gekennzeichnet, dass** eines (2) der beiden plattenförmigen Elemente (2 und 3) einen zweiten, den ersten Rahmen umgebenden Rahmen (1) trägt, der fest mit dem plattenförmigen Element (2) verankert ist und eine dem Abstand zwischen dem plattenförmigen Element 2 und dem plattenförmigen Element 3 entsprechende Höhe sowie einen Umfang aufweist, der über demjenigen der genannten Isolierungsplatte liegt, wobei eine Kammer (8) zwischen diesen beiden Rahmen und zwischen den beiden plattenförmigen Elementen (2 und 3) gebildet wird, welche mit einer Pneumatikanlage verbunden ist, die einen Unterdruck in der genannten Kammer (8) und über diese Kammer (8) in dem Formraum herstellt.

2. Presse nach Anspruch 1, **dadurch gekennzeichnet, dass** der Rahmen (1) auf seinem gesamten Aussenumfang ein plattenförmiges Element (4) aufweist, das durch Anziehen von Schrauben mit dem genannten Rahmen verbunden wird, wobei hierdurch eine obere Dichtung (5a) und eine untere Dichtung (5b) zwischen dem plattenförmigen Element (4) und dem Rahmen (1) gehaltert werden kann.

3. Presse nach Anspruch 1, **dadurch gekennzeichnet, dass** sie ein oberes bewegliches plattenförmiges Element (2), einen fest mit dem beweglichen plattenförmigen Element ausgebildeten Rahmen (1) und ein festes unteres plattenförmiges Element (3) aufweist.

4. Presse nach Anspruch 1, **dadurch gekennzeichnet, dass** sie vier mechanische Hebeböcke (11) zum senkrechten Verfahren eines beweglichen oberen plattenförmigen Elmentes (2) umfasst, wobei die Schnecken dieser Hebeböcke an ihrem oberen Ende einen Flansch (15) aufweisen, der jeweils in einen entsprechenden Sitz (15a) eingreift, welcher in der Wandstärke des beweglichen oberen plattenförmigen Elementes (2) ausgebildet ist und dazu dient, den Flansch (15) zu zentrieren und seitliche Bewegungen des beweglichen oberen plattenförmigen Elementes (2) zu vermeiden, sowie Spielraum für vertikale axiale Bewegungen des oberen plattenförmigen Elementes zu gewähren.

## Revendications

1. Presse pour injection de mousse dans des panneaux isolants du type comprenant un premier cadre délimitant le développement périmétrique d'une cavité de moulage pour le panneau, et deux plaques (2 et 3) superposables, l'une d'entre elles étant mobile par rapport à l'autre étant fixe, **caractérisée en ce que** la plaque (2) supporte, en en étant solidaire, un second cadre (1) qui entoure ledit premier cadre et est d'hauteur égale à la distance entre la plaque 2 et la plaque 3 et de développement périmétral supérieur à celui du panneau mentionné ci-dessus, une chambre (8) étant formée entre ces deux cadres et entre ces deux plaques (2 et 3), ladite chambre étant reliée à une installation pneumatique conçue pour produire le vide dans ladite chambre (8) et donc dans la cavité de moulage.

2. Une presse selon la revendication 1, **caractérisée en ce que** le cadre (1) présente sur tout son périmètre externe une plaque (4) fixée audit cadre (1) par l'intermédiaire du serrage de boulons, ledit serrage permettant de maintenir un joint supérieur (5a) et un joint inférieur (5b) entre la plaque (4) et le cadre (1).

3. Une presse selon la revendication 1, **caractérisée en ce qu'**elle présente une plaque supérieure mobile (2), un cadre (1) solidaire de ladite plaque mobile et une plaque inférieure fixe (3).

4. Une presse selon la revendication 1, **caractérisée en ce qu'**elle comprend quatre vérins mécaniques (11) pour mettre en mouvement une plaque supérieure mobile (2), la vis de chacun des vérins présentant sur son extrémité supérieure une flange (15) insérée dans un logement spécial (15a) conformé dans la plaque supérieure mobile (2), ce logement ayant la fonction de centrer chaque flange (15) et empêchant tout déplacement latéral de la plaque supérieure mobile (2) tout en garantissant la liberté de déplacement axial vertical de ladite plaque supérieure.
